# EUROPÄISCHE PATENTSCHRIFT

(11) **EP 3 618 999 B1**
(45) Veröffentlichungstag und Bekanntmachung des Hinweises auf die Patenterteilung: **14.08.2024**
(21) Anmeldenummer: 18734813.1
(22) Anmeldetag: 28.06.2018
(51) Int. Cl.: B25B 21/00, B25F 5/00, B25B 23/14, B27G 19/02

(54) **ELEKTROWERKZEUG UND VERFAHREN**
ELECTRIC TOOL AND METHOD
OUTIL ÉLECTRIQUE ET PROCÉDÉ

(30) Priorität: 24.07.2017 WO PCT/EP2017/068648; 24.07.2017 WO PCT/EP2017/068649
(43) Veröffentlichungstag der Anmeldung: 11.03.2020
(73) Patentinhaber: Festool GmbH, 73240 Wendlingen (DE)
(72) Erfinder: RUSCH, Marc, 73728 Esslingen am Nerckar (DE); SCHMID, Markus, 73240 Wendlingen am Neckar (DE)
(74) Vertreter: Patentanwälte Magenbauer & Kollegen Partnerschaft mbB
(86) Internationale Anmeldenummer: PCT/EP2018/067432
(87) Internationale Veröffentlichungsnummer: WO 2019/020307

(56) Entgegenhaltungen:
- EP-A2- 0 199 883
- EP-A2- 0 978 714
- EP-A2- 2 604 388
- DE-A1- 102013 212 691
- JP-A- 2013 078 820
- US-A- 5 850 044
- US-A1- 2002 037 785
- US-A1- 2012 289 377

## Beschreibung

Die Erfindung betrifft ein Elektrowerkzeug, umfassend eine Tragstruktur, ein an der Tragstruktur angeordnetes Drehlager, eine über das Drehlager an der Tragestruktur gelagerte Welle, ein mit der Welle gekoppeltes rotierbares Werkzeug, insbesondere ein Sägeblatt, Fräser oder eine Schleifscheibe, eine Dehnungsmessstreifen-Anordnung zur Erfassung einer mechanischen Vektorgröße, die von einer vom Werkzeug ausgehenden Kraft abhängt, und eine Steuereinrichtung, die ausgebildet ist, ein Ereignis und/oder einen Zustand des Elektrowerkzeugs gemäß einer Richtung und/oder Richtungsänderung der erfassten mechanischen Vektorgröße zu erkennen.

Die WO 2014/105935 beschreibt eine Tischsäge mit einem Kickback-Detektionssystem, das einen zwischen einem Lager und einer Welle angeordneten Sensor umfasst. Der Sensor kann als Dehnungsmessstreifen ausgebildet sein.

Die US 2012/289377 A1 beschreibt eine Kreissäge mit einem Dehnungsmessstreifensensor in der Form einer Lastzelle. Die Lastzelle ist an einer Lagerabdeckung angeordnet.

Die EP 2 604 388 A2 betrifft eine Bohrmaschine mit einem Kraftsensor zur Erkennung eines Kickback.

Die JP 2013 078820 A betrifft ein Elektrowerkzeug mit einer Lastzelle, die an einer Lagerabdeckung angeordnet ist.

Die EP 0 978 714 A2 betrifft eine Lastzelle. Es wird erwähnt, dass eine typische Lastzelle ein oder mehrere Kraftmesselemente umfasst.

Die EP 0 199 883 beschreibt ein motorisch betriebenes Handwerkzeug, das einen im Gehäuse schwenkbar gelagerten Lagerbock aufweist, in dem eine Getriebewelle über ein Schrägkugellager gelagert ist. Der Lagerbock ist im Gehäuse über elektrische Kraftmesselemente abgestützt, mittels deren die bei der Drehmomentübertragung auftretenden Reaktionskräfte erfasst und als Signal zur Erzeugung von Steuerfunktionen des Handwerkzeuges verwendet werden können.

Die US 2002/0037785 A1 beschreibt ein Planetengetriebe. Ein Sensor kann als Dehnungsmessstreifen ausgeführt sein.

Die DE 10 2013 212 691 A1 beschreibt eine Handwerkzeugmaschine mit einer Schlagwerkeinheit. Die Handwerkzeugmaschine weist eine Sensoreinheit auf. Die Sensoreinheit kann einen Dehnungsmessstreifen umfassen.

Eine Aufgabe der Erfindung besteht darin, das eingangs genannte Elektrowerkzeug so zu modifizieren, dass es einfacher hergestellt werden kann.

Die Aufgabe wird durch ein Elektrowerkzeug gemäß Anspruch 1 gelöst. Die Dehnungsmessstreifen-Anordnung ist an einem stationären Strukturabschnitt angeordnet, der kraftübertragend mit dem Drehlager gekoppelt ist. Die Dehnungsmessstreifen-Anordnung ist nicht an dem Drehlager angeordnet. Der Strukturabschnitt ist Teil der Tragstruktur und/oder ist unmittelbar an der Tragstruktur angeordnet. Die Dehnungsmessstreifen-Anordnung umfasst mehrere Dehnungsmessstreifen, die auf einer die Welle umlaufenden Bahn verteilt angeordnet sind. Die Dehnungsmessstreifen-Anordnung ist ausgebildet, die mechanische Vektorgröße als wenigstens zweidimensionalen Vektor zu erfassen und zu diesem Zweck die der mechanischen Vektorgröße zugrunde liegende mechanische Größe in wenigstens zwei verschiedene Raumrichtungen zu messen.

Mit der Bezeichnung "stationärer Strukturabschnitt" soll insbesondere ein Strukturabschnitt gemeint sein, der gegenüber der Welle stationär ist; d.h., ein Strukturabschnitt, der sich nicht mit der Welle mitdreht.

Die Erfindung beruht insbesondere auf der Erkenntnis, dass die vom Werkzeug ausgehende Kraft nicht nur direkt an dem Drehlager selbst detektierbar ist, sondern insbesondere auch an einem mit dem Drehlager kraftübertragend gekoppelten stationären Strukturabschnitt erfasst werden kann. Der Dehnungsmessstreifen wird dementsprechend nicht direkt am Drehlager angeordnet - was herstellungstechnisch aufwändig wäre - sondern wird stattdessen an dem stationären Strukturabschnitt angebracht.

Die Dehnungsmessstreifen-Anordnung ist zweckmäßigerweise vom Drehlager beabstandet.

In bevorzugter Ausgestaltung handelt es sich bei dem Strukturabschnitt um einen Abschnitt der Tragstruktur, an der das Drehlager angeordnet ist. Der Strukturabschnitt kann beispielsweise ein Lagerflansch sein, in den das Drehlager eingesetzt ist und an den das Drehlager unmittelbar anliegt. Zweckmäßigerweise ist die Dehnungsmessstreifen-Anordnung an einer dem Drehlager abgewandten, radial nach außen gerichteten Fläche des Lagerflansches angeordnet und/oder von dem Drehlager beabstandet an einer radial nach innen gerichteten Fläche des Lagerflansches angeordnet. Es hat sich herausgestellt, dass an dieser Stelle Kräfte, die vom Werkzeug ausgehen, mittels der Dehnungsmessstreifen-Anordnung gut genug erfasst werden können, um das Ereignis und/oder den Zustand des Elektrowerkzeugs erkennen zu können.

Gemäß einer weiteren bevorzugten Ausgestaltung ist der Strukturabschnitt ein Abschnitt eines Getriebegehäuses und das Drehlager liegt unmittelbar am Getriebegehäuse an. Zweckmäßigerweise ist die Dehnungsmessstreifen-Anordnung an einer dem Drehlager abgewandten, radial nach außen und/oder einer radial nach innen gerichteten Fläche des Getriebegehäuses angeordnet.

Bei dem durch die Steuereinrichtung zu bestimmenden Zustand handelt es sich insbesondere um einen sogenannten "Kickback" des Elektrowerkzeugs. Mit dem Begriff "Kickback" ist typischerweise ein Ereignis gemeint, bei dem während der Bearbeitung eines Werkstücks durch das Elektrowerkzeug eine plötzliche und unerwartete Kraft zwischen dem Elektrowerkzeug und dem Werkstück auftritt, durch die das Elektrowerkzeug oder das Werkstück dann beschleunigt und in Bewegung versetzt wird. Bei Tischkreissägen führt ein Kickback in der Regel zu einer unerwarteten Beschleunigung des Werkstücks in Richtung des Benutzers. Bei Handkreissägen kann es bei einem Kickback zu unerwarteten Bewegungen des Werkzeugs kommen. Kickbacks können zu Verletzungen des Benutzers führen und stellen daher eine Beeinträchtigung der Betriebssicherheit dar.

Ein Kickback kann insbesondere bei einem ruckartigen, zu schnellen Eintauchen des Werkzeugs in das Werkstück, bei einem Rückwärtssägen, einem Verklemmen des Werkzeugs im Werkstück, bei bestimmten Werkstückeigenschaften (z.B. inhomogenes Holz, Spannungen) und/oder bei einem stumpfen Werkzeug auftreten. Mit der vorstehend beschriebenen Ereigniserkennung anhand der erfassten mechanischen Vektorgröße soll insbesondere ein Kickback-Ereignis erkannt werden. Mit dem zu erkennenden Kickback bzw. Kickback-Ereignis ist hier insbesondere auch ein unmittelbar bevorstehender Kickback gemeint, also ein Ereignis, bei dem die Ursachen des Kickbacks bereits gegeben sind, jedoch noch keine bzw. keine signifikante Beschleunigung des Elektrowerkzeugs und/oder des Werkstücks stattgefunden hat. Bevor das Elektrowerkzeug oder das Werkstück durch den Kickback in Bewegung gesetzt bzw. signifikant beschleunigt werden, kündigt sich der Kickback bereits dadurch an, dass die vom Werkzeug ausgehende Kraft ihre Richtung ändert. Das Werkzeug drängt also kurz vor einem Kickback bzw. zu Beginn eines Kickbacks in eine andere Richtung als im Normalbetrieb. Dieses Drängen in eine andere Richtung kann durch das Erfassen der mechanischen Vektorgröße detektiert werden, um so darauf zu schließen, dass ein Kickback-Zustand vorliegt.

Ferner kann es sich bei dem zu erkennenden Ereignis um ein Eintauchen des Werkzeugs in das Werkstück, ein Vorwärtssägen oder ein Rückwärtssägen handeln.

Bei dem zu erkennenden Zustand handelt es sich insbesondere um einen Verschleißzustand des Elektrowerkzeugs, vorzugsweise einen Verschleißzustand des insbesondere als Sägeblatt ausgebildeten Werkzeugs.

Vorteilhafte Weiterbildungen sind Gegenstand der Unteransprüche.

Die Erfindung betrifft ferner ein Verfahren zum Erkennen eines Ereignisses und/oder eines Zustands eines Elektrowerkzeugs gemäß Anspruch 10.

Zweckmäßigerweise wird das Verfahren mit einem hier beschriebenen Elektrowerkzeug durchgeführt.

Weitere exemplarische Details sowie beispielhafte Ausführungsformen werden nachstehend unter Bezugnahme auf die Figuren erläutert. Dabei zeigt
- Figur 1: eine schematische Darstellung eines Elektrowerkzeugs gemäß einer ersten Ausführungsform,
- Figur 2: eine Schnittdarstellung einer Welle, eines Drehlagers und einer Tragstruktur eines Elektrowerkzeugs gemäß einer zweiten Ausführungsform,
- Figur 3: eine Schnittdarstellung eines Elektrowerkzeugs gemäß der zweiten Ausführungsform,
- Figur 4: ein Lagerflansch eines Elektrowerkzeugs gemäß der zweiten Ausführungsform,
- Figur 5: eine Schnittdarstellung einer Welle, eines Drehlagers und einer Tragstruktur eines Elektrowerkzeugs gemäß einer dritten Ausführungsform,
- Figur 6: eine Schnittdarstellung eines Elektrowerkzeugs gemäß der dritten Ausführungsform,
- Figur 7: eine Schnittdarstellung eines Elektrowerkzeugs gemäß einer vierten Ausführungsform,
- Figur 8: ein Diagramm zur Illustration einer Ereignis und/oder Zustandserkennung basierend auf einer Richtung oder Richtungsänderung einer mechanischen Vektorgröße,
- Figur 9: ein Blockdiagramm eines Verfahrens, und
- Figur 10: eine schematische Darstellung eines Elektrowerkzeugs gemäß einer fünften Ausführungsform und.

Bei der nachstehenden Erläuterung wird auf die in den Figuren eingezeichneten Richtungen "x", "y", "z" Bezug genommen. Die x-Richtung, y-Richtung und z-Richtung sind orthogonal zueinander ausgerichtet. Die x-Richtung und y-Richtung können auch als horizontale Richtung und die z-Richtung als vertikale Richtung bezeichnet werden. Ferner können die y-Richtung und die z-Richtung in Bezug auf die Welle 8 als Radialrichtungen und die x-Richtung als Axialrichtung bezeichnet werden.

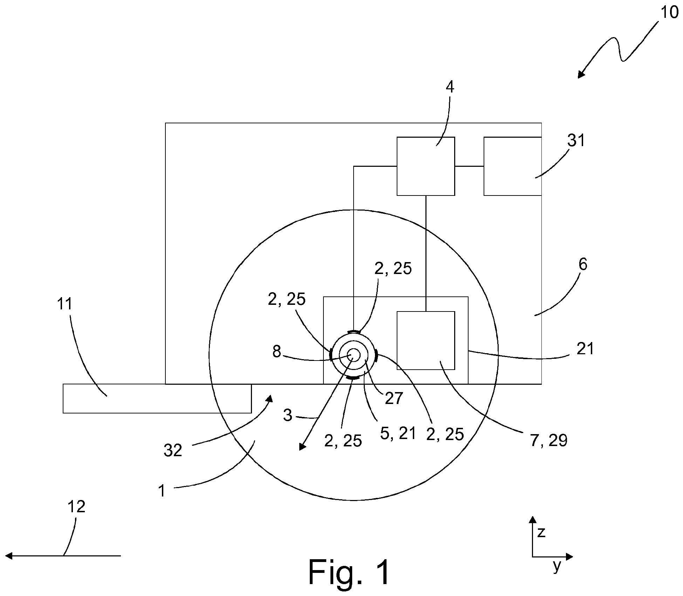

Die Figur 1 zeigt ein Elektrowerkzeug 10 gemäß einer ersten Ausführungsform. Das Elektrowerkzeug 10 umfasst eine Tragstruktur 21 sowie ein an der Tragstruktur 21 angeordnetes Drehlager 27. Das Drehlager 27 ist vorzugsweise an der Tragstruktur 21 befestigt und/oder wird von dieser getragen. Zweckmäßigerweise liegt das Drehlager 27 unmittelbar an der Tragstruktur an, beispielsweise mit seinem nachstehend noch erläuterten Außenring 33 und/oder einer am Außenring 33 angeordneten (in den Figuren nicht gezeigten) Kopplungsstruktur.

Das Elektrowerkzeug 10 verfügt ferner über eine Welle 8, beispielsweise eine Antriebs- oder Abtriebswelle, die über das Drehlager 27 drehbar an der Tragestruktur 21 gelagert ist. Die Tragestruktur 21 dreht sich vorzugsweise nicht mit der Welle 8 mit und kann auch als stationäre Struktur bezeichnet werden.

Das Elektrowerkzeug 10 verfügt ferner ein mit der Welle 8 gekoppeltes rotierbares Werkzeug 1, insbesondere ein Sägeblatt, Fräser oder eine Schleifscheibe.

Das Elektrowerkzeug 10 verfügt über eine Dehnungsmessstreifen-Anordnung 2 zur Erfassung einer mechanischen Größe 3 in Form einer mechanischen Vektorgröße, die von einer vom Werkzeug 1 ausgehenden Kraft abhängt. Die Dehnungsmessstreifen-Anordnung 2 ist an einem stationären, kraftübertragend mit dem Drehlager 27 gekoppelten Strukturabschnitt 5 angeordnet. Die Dehnungsmessstreifen-Anordnung ist nicht an dem Drehlager 27 angeordnet.

Ferner umfasst das Elektrowerkzeug 10 eine Steuereinrichtung 4, die ausgebildet ist, ein Ereignis und/oder einen Zustand des Elektrowerkzeugs 10 gemäß einer Richtung und/oder Richtungsänderung erfassten mechanischen Größe 3 zu erkennen.

Im Folgenden werden exemplarische Details des Elektrowerkzeugs 10 sowie weitere beispielhafte Ausführungsformen erläutert.

Bei dem Elektrowerkzeug 10 handelt es sich vorzugsweise um eine Säge, insbesondere um eine Handkreissäge oder eine Tauchsäge. Das Elektrowerkzeug 10 kann ferner auch als Flachdübelfräse oder als Winkelschleifer ausgebildet sein.

Das Werkzeug 1 ist insbesondere kreisförmig und dreht sich im Betrieb exemplarisch im Uhrzeigersinn.

Exemplarisch verfügt das Elektrowerkzeug 10 über ein Gehäuse 6, in dem insbesondere die Dehnungsmessstreifen-Anordnung 2 und die Steuereinrichtung 4 angeordnet sind. An dem Gehäuse 6 ist eine Auflagefläche 32 vorgesehen, mit der das Elektrowerkzeug 10 auf ein zu bearbeitendes Werkstück 11 aufgelegt werden kann.

Das Elektrowerkzeug 10 verfügt über eine Antriebseinrichtung 7. Die Antriebseinrichtung 7 umfasst beispielsweise einen Elektromotor und ein Getriebe. Die Antriebseinrichtung 7 wird vorzugsweise von der Steuereinrichtung 4 angesteuert. Das Elektrowerkzeug 10 verfügt ferner über die Welle 8, die durch die Antriebseinrichtung 7 angetrieben werden kann. Die Welle 8 ist mit ihrer Axialrichtung in x-Richtung ausgerichtet. Das Werkzeug 1 ist mechanisch mit der Welle 8 gekoppelt. Zweckmäßigerweise ist das Werkzeug 1 an der Welle 8 befestigt.

Das Elektrowerkzeug 10 verfügt ferner über die Tragstruktur 21, die zweckmäßigerweise im Gehäuse 6 angeordnet ist. An der Tragstruktur 21 ist die Welle 8 gelagert. Ferner kann die Tragstruktur 21 als Gehäuse für die Antriebseinrichtung 7 ausgebildet sein. Die Tragstruktur 21 kann beispielsweise ein Antriebsgehäuse, insbesondere ein Getriebegehäuse darstellen oder umfassen.

Exemplarisch verfügt das Elektrowerkzeug 10 ferner über eine Benutzerschnittstelle 31. Die Benutzerschnittstelle 31 verfügt beispielsweise über eine Eingabevorrichtung, mit der der Benutzer das Elektrowerkzeug 10 z.B. ein- und ausschalten und/oder konfigurieren und/oder kalibrieren kann.

Wie in der Figur 1 gezeigt, liegt das Elektrowerkzeug 10 bei der Bearbeitung des Werkstücks 11 typischerweise mit der Auflagefläche 32 auf dem Werkstück 11 auf und wird in einer Vorschubrichtung 12 relativ zum Werkstück 11 bewegt. Exemplarisch sägen die Sägezähne des Werkzeugs 1 dabei von unten nach oben in das Werkstück 11.

Die Dehnungsmessstreifen-Anordnung 2 ist zweckmäßigerweise über die Tragestruktur 21 und das Drehlager 27 kraftübertragend mit der Welle 8 gekoppelt. Die Dehnungsmessstreifen-Anordnung 2 ist insbesondere ausgebildet, als die mechanische Größe 3 eine Deformation des Strukturabschnitts 5 zu erfassen, die durch eine vom Werkzeug 1 ausgehende Kraft bewirkt wird. Die Dehnungsmessstreifen-Anordnung 2 ist vorzugsweise laserstrukturiert.

In der Figur 1 ist der Strukturabschnitt 5 exemplarisch Teil der Tragstruktur 21. Der Strukturabschnitt 5 ist exemplarisch ringförmig und/oder zylinderförmig ausgebildet. Zweckmäßigerweise trägt der Strukturabschnitt 5 hier das Drehlager 27.

Alternativ dazu ist es auch möglich, dass der Strukturabschnitt 5 selbst kein Teil der Tragstruktur 21 ist, also insbesondere nicht das Drehlager 27 trägt. In diesem alternativen Fall ist der Strukturabschnitt 5 zweckmäßigerweise unmittelbar an der Tragstruktur 21 angeordnet. Vorzugsweise umgreift der Strukturabschnitt 5 in diesem Fall die Tragstruktur 21 und/oder ist insbesondere auf die Tragstruktur 21 aufgesetzt.

Das Drehlager 27 ist vorzugsweise unmittelbar an der Tragstruktur 21 angeordnet. Zweckmäßigerweise ist das Drehlager 27 direkt an der Tragstruktur 21 angebracht. Das Drehlager 27 verfügt, wie nachstehend noch erläutert, einen Außenring 33 und ist insbesondere mit dem Außenring 33 (und/oder einer nicht gezeigten Kopplungsstruktur) an der Tragstruktur 21 angebracht. Vorzugsweise umgreift die Tragstruktur 21 das Drehlager 27.

Zweckmäßigerweise ist die Dehnungsmessstreifen-Anordnung 2 an einer dem Drehlager 27 abgewandten und/oder radial nach außen gerichteten Fläche des Strukturabschnitts 5 angeordnet, wie dies exemplarisch in der Figur 1 gezeigt ist. Alternativ dazu kann die Dehnungsmessstreifen-Anordnung 2 auch von dem Drehlager 27 beabstandet an einer radial nach innen gerichteten Fläche des Strukturabschnitts 5 angeordnet sein. Exemplarisch umfasst die Dehnungsmessstreifen-Anordnung 2 mehrere Dehnungsmessstreifen 25, die auf einer die Welle 8 umlaufenden (gedachten) Bahn verteilt angeordnet sind. Die (gedachte) Bahn ist vorzugsweise kreisförmig. Die Dehnungsmessstreifen 25 sind voneinander beabstandet, insbesondere unter gleichen Winkelabständen. Exemplarisch sind die Dehnungsmessstreifen 25 um 90 Grad voneinander beabstandet.

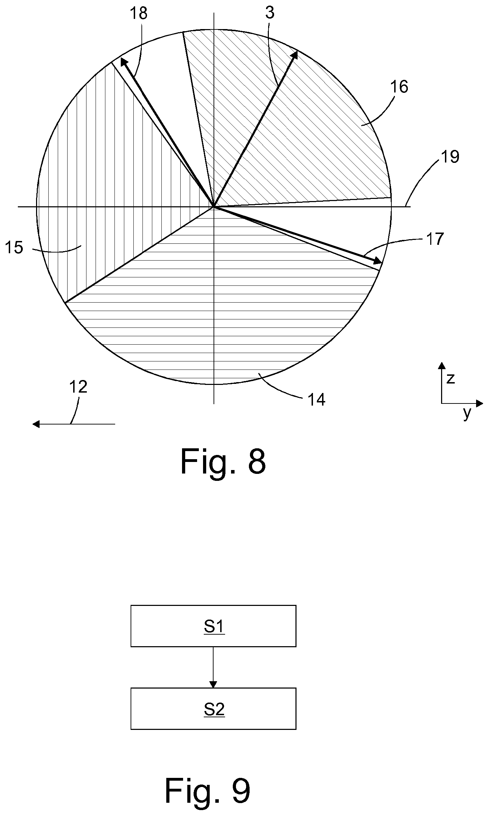

Alternativ zu der gezeigten Ausgestaltung und nicht gemäß der beanspruchten Erfindung ist es auch möglich, dass die Dehnungsmessstreifen-Anordnung 2 genau einen Dehnungsmessstreifen 25 umfasst; also dass an dem Strukturabschnitt 5 und/oder der Tragestruktur 21 nur ein Dehnungsmessstreifen 25 vorhanden ist. Der Dehnungsmessstreifen 25 befindet sich dann vorzugsweise in einem Winkelbereich, der als Indikator für das zu erkennende Ereignis bzw. den zu erkennenden Zustand dient, beispielsweise in einem der nachstehend noch erläuterten Richtungsbereich 14, 15, 16 (vgl. Fig. 8).

Vorzugsweise ist die Dehnungsmessstreifen-Anordnung 2 und/oder die Steuereinrichtung 4 ausgebildet, die mechanische Größe 3 kontinuierlich zu erfassen, so dass eine Änderung, insbesondere eine Richtungsänderung der mechanischen Größe 3 erfasst werden kann.

Die Steuereinrichtung 4 ist beispielsweise als Mikrocontroller ausgebildet. Die Steuereinrichtung 4 ist kommunikativ mit der Dehnungsmessstreifen-Anordnung 2 gekoppelt, die auch als Sensoreinrichtung bezeichnet werden kann. Die Steuereinrichtung 4 ist ausgebildet, basierend auf der mechanischen Größe 3 ein Ereignis und/oder einen Zustand des Elektrowerkzeugs 10 zu bestimmen. Beispielsweise ist die Steuereinrichtung 4 ausgebildet, festzustellen, ob die Richtung der erfassten mechanischen Größe 3 innerhalb oder außerhalb eines bestimmten Richtungsbereich liegt und basierend auf dieser Feststellung zu entscheiden, ob ein bestimmter Zustand und/oder ein Ereignis vorliegt oder nicht. Zusätzlich oder alternativ dazu kann die Steuereinrichtung 4 auch ausgebildet sein, die mechanische Größe 3, insbesondere einen Betrag der mechanischen Größe 3, mit einem Schwellenwert zu vergleichen und basierend auf dem Vergleich zu entscheiden, ob ein bestimmter Zustand und/oder ein Ereignis vorliegt oder nicht.

Vorzugweise ist die Steuereinrichtung 4 ausgebildet, basierend auf einer Funktionsbestimmungsinformation wahlweise eine erste Erkennungsfunktion oder eine von der ersten Erkennungsfunktion verschiedene zweite Erkennungsfunktion zu bestimmen und die auf der erfassten mechanischen Größe basierende Erkennung des Kickback-Ereignisses unter Verwendung der bestimmten Erkennungsfunktion durchzuführen.

Die beiden Erkennungsfunktionen unterscheiden sich zweckmäßigerweise in ihrer Sensitivität.

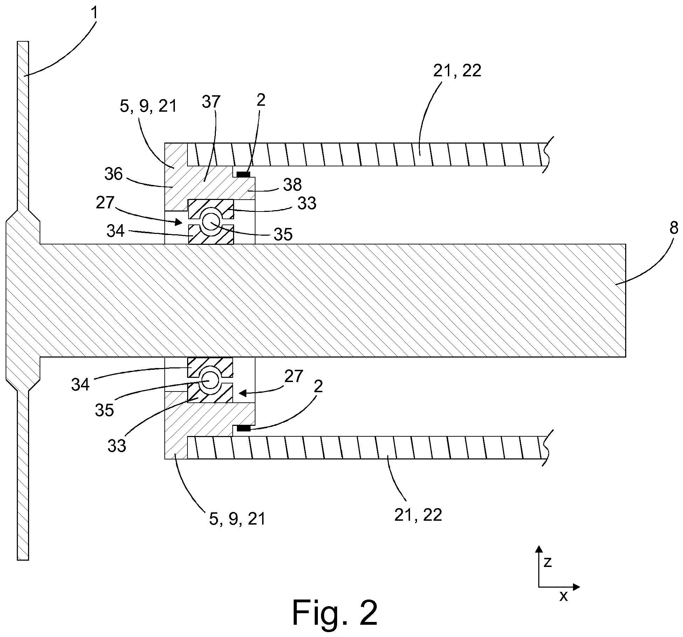

Unter Bezugnahme auf die Figuren 2 bis 7 soll nachstehend auf exemplarische Ausführungsformen eingegangen werden, die jeweils unterschiedliche Ausgestaltungen des Strukturabschnitts 5 bzw. der Anordnung der Dehnungsmessstreifen-Anordnung 2 am Strukturabschnitt 5 betreffen. Die nachstehend erläuterten Ausführungsformen sind zweckmäßigerweise Weiterbildungen der vorstehend beschriebenen ersten Ausführungsform, so dass die vorstehenden Erläuterungen auch für die nachstehend erläuterten Ausführungsformen gelten.

Gemäß einer zweiten Ausführungsform umfasst die Tragstruktur 21 einen Lagerflansch 9 und der Strukturabschnitt 5 ist Teil des Lagerflansches 9. Die Dehnungsmessstreifen-Anordnung 2 ist an dem Lagerflansch 9 angeordnet.

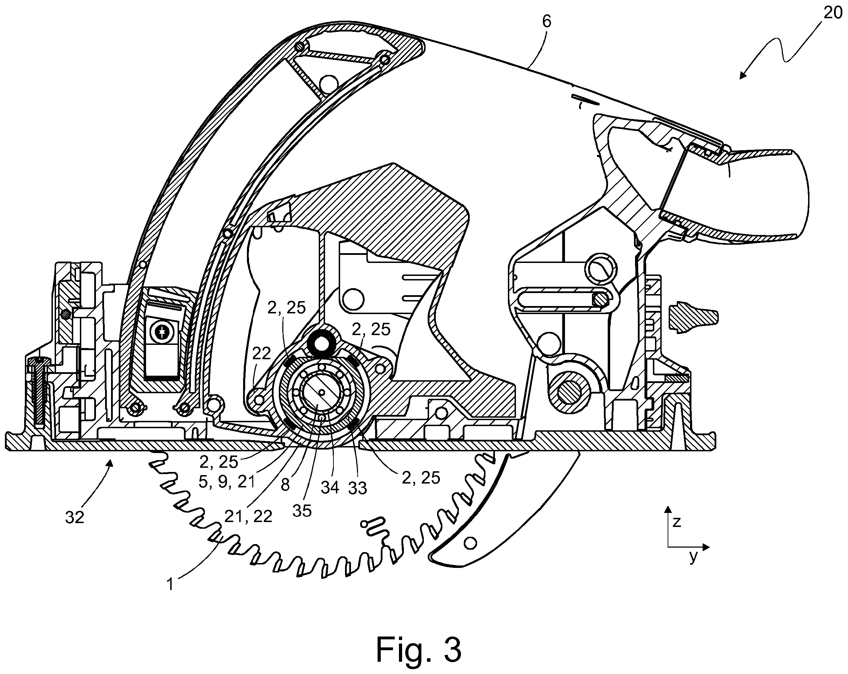

Eine exemplarische Ausgestaltung der zweiten Ausführungsform ist in den Figuren 2, 3 und 4 gezeigt. In der Figur 3 ist ein gemäß der zweiten Ausführungsform ausgebildetes Elektrowerkzeug 20 gezeigt.

Das Drehlager 27 ist hier exemplarisch unmittelbar an dem Lagerflansch 9 angeordnet. Der Lagerflansch 9 umgreift das Drehlager 27; das Drehlager 27 liegt insbesondere an einer radial nach innen gerichteten Fläche des Lagerflansches 9 an. Die Dehnungsmessstreifen-Anordnung 2 ist an einer dem Drehlager 27 abgewandten und radial nach außen gerichteten Fläche des Lagerflansches 9 angeordnet.

Gemäß einer nicht gezeigten Ausgestaltung kann die Dehnungsmessstreifen-Anordnung 2 auch vom Drehlager 27 beabstandet an einer radial nach innen gerichteten Fläche des Lagerflansches 9 angeordnet sein.

Zweckmäßigerweise weist der Lagerflansch 9 eine Drehlager-Aufnahme 44 in der Form einer zylindrischen Aussparung auf. Die Drehlager-Aufnahme 44 umfasst exemplarisch eine radial nach innen gerichtete innere Fläche 45, die auch als innere Mantelfläche bezeichnet werden kann, sowie eine ringförmige, normal zur Axialrichtung ausgerichtete Anlagefläche 46, die die Drehlager-Aufnahme 44 in Axialrichtung begrenzt. Im eingesetzten Zustand liegt das Drehlager 27 zweckmäßigerweise mit seinem Außenring 33 an der inneren Mantelfläche 45 an und mit seiner Stirnseite zweckmäßigerweise an der Anlagefläche 46 an.

Der Lagerflansch 9 verfügt zweckmäßigerweise über eine insgesamt ringförmige Grundgestalt und weist eine kreisförmige Öffnung auf, durch die die Welle 8 verläuft. Der Innendurchmesser des Lagerflansches 9 ist zweckmäßigerweise größer als der Außendurchmesser der Welle 8, so dass sich die Welle 8 und der Lagerflansch 9 vorzugsweise nicht berühren. Bei dem Lagerflansch 9 handelt es sich vorzugsweise um ein einstückiges Teil.

Zweckmäßigerweise verfügt der Lagerflansch 9 über mehrere in Axialrichtung der Welle 8 aneinander anschließende Axialabschnitte, die zweckmäßigerweise jeweils eine ringförmige Grundgestalt aufweisen. Exemplarisch umfasst der Lagerflansch als Axialabschnitte einen Flanschabschnitt 36, einen Drehlager-Aufnahmeabschnitt 37 und einen Kragenabschnitt 38.

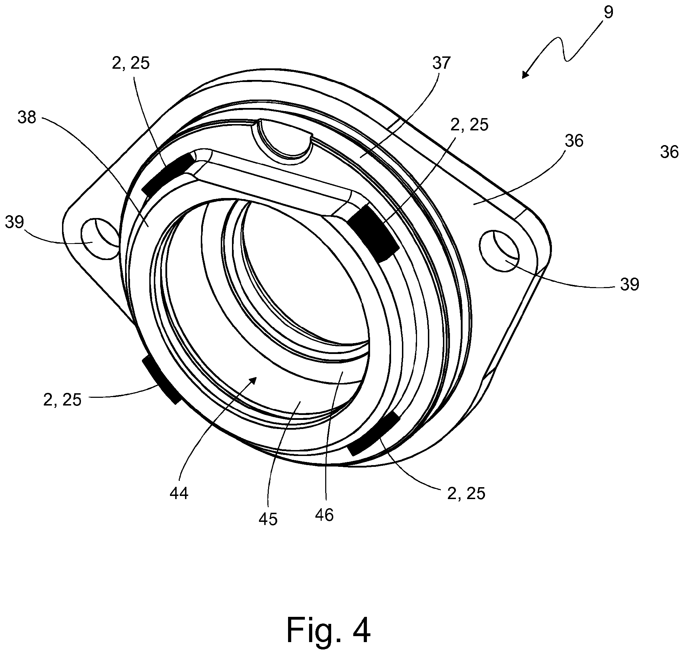

Der Flanschabschnitt 36 weist exemplarisch radial - also in y-Richtung und in z-Richtung die größte Erstreckung der Axialabschnitte auf. Ferner ist der Flanschabschnitt 36 exemplarisch der Axialabschnitt mit dem kleinsten Innendurchmesser. Der Flanschabschnitt 36 umfasst Befestigungsabschnitte 39 (in der Figur 4 gezeigt), mit denen der Lagerflansch 9, wie nachstehend noch erläutert, an dem ersten Teilabschnitt 22 befestigt ist.

An den Flanschabschnitt 36 schließt sich in Axialrichtung der Drehlager-Aufnahmeabschnitt 37 an, in dem die Drehlager-Aufnahme 44 angeordnet ist. Der Drehlager-Aufnahmeabschnitt 37 weist zweckmäßigerweise einen kleineren Außendurchmesser und/oder einen größeren Innendurchmesser als der Flanschabschnitt 36 auf.

An den Drehlager-Aufnahmeabschnitt 37 schließt sich in Axialrichtung der Kragenabschnitt 38 an. Der Kragenabschnitt 38 kann zweckmäßigerweise auch einen Teil der axialen Erstreckung der Drehlager-Aufnahme 44 bereitstellen. Der Kragenabschnitt 38 hat exemplarisch einen kleineren Außendurchmesser als der Drehlager-Aufnahmeabschnitt 37 und/oder den gleichen Innendurchmesser wie der Drehlager-Aufnahmeabschnitt 37.

Exemplarisch ist die Dehnungsmessstreifen-Anordnung 2 an dem Kragenabschnitt 38, insbesondere an der radial nach außen gerichteten Mantelfläche des Kragenabschnitts 38 angeordnet. Zweckmäßigerweise stellt der Kragenabschnitt 38 den Strukturabschnitt 5 dar.

Gemäß einer nicht gezeigten Ausgestaltung kann die Dehnungsmessstreifen-Anordnung 2 auch an einer nach innen gerichteten Mantelfläche des Lagerflansches 9, insbesondere des Kragenabschnitts 38, angeordnet sein.

Exemplarisch sind vier um den Umfang des Kragenabschnitts 38 verteilt angeordnete Dehnungsmessstreifen 25 vorhanden. Alternativ dazu können auch genau zwei oder drei Dehnungsmessstreifen 25 oder mehr als vier Dehnungsmessstreifen 25 vorhanden sein.

Wie in der Figur 2 gezeigt, bildet der Lagerflansch 9 zusammen mit einem ersten Teilabschnitt 22 die Tragstruktur 21. Der erste Teilabschnitt 22 ist zweckmäßigerweise Teil des Getriebegehäuses. Exemplarisch hat der erste Teilabschnitt 22 eine hohlzylindrische Form und umschließt zweckmäßigerweise die Welle 8, wobei der erste Teilabschnitt 22 von der Welle 8 vorzugsweise beabstandet ist.

Der Lagerflansch 9 ist insbesondere an einem Ende des ersten Teilabschnitts 22 befestigt. Zweckmäßigerweise ist der Lagerflansch 9 über den Flanschabschnitt 36, insbesondere über die Befestigungsabschnitte 39 am ersten Teilabschnitt 22, insbesondere am Getriebegehäuse, befestigt. Exemplarisch verfügen die Befestigungsabschnitte 39 über Löcher, durch die ein Befestigungsmittel, beispielsweise eine Schraube, greift, um den Lagerflansch 9 an dem ersten Teilabschnitt 22 zu befestigen.

Exemplarisch liegt der erste Teilabschnitt 22 mit seiner inneren Mantelfläche an der äußeren Mantelfläche des Lagerflansches, insbesondere des Drehlager-Aufnahmeabschnitts 37, an. Zweckmäßigerweise liegt die innere Mantelfläche des ersten Teilabschnitts 22 gegenüber der äußeren Mantelfläche des Kragenabschnitts 38 und ist von diesem und insbesondere auch von der Dehnungsmessstreifen-Anordnung 2 radial beabstandet.

Das Drehlager 27 liegt mit seinem Außenring 33 an der inneren Fläche des Lagerflansches 9 an und ist vorzugsweise drehfest an dem Lagerflansch 9 befestigt. Das Drehlager 27 umfasst Wälzkörper 35 sowie einen Innenring 34, der über die Wälzkörper 35 relativ zum Außenring 33 drehbar gelagert ist. An dem Innenring 34 ist die Welle 8 befestigt.

Bei einer Variante der zweiten Ausführungsform kann die Dehnungsmessstreifen-Anordnung 2 auch an dem ersten Teilabschnitt 22, insbesondere an einer radial nach außen und/oder radial nach innen gerichteten Fläche, beispielsweise einer Mantelfläche, des ersten Teilabschnitts 22, angeordnet sein. Ferner kann die Dehnungsmessstreifen-Anordnung 2 auch an einem den Lagerflansch 9 und/oder den ersten Teilabschnitt 22 umgreifenden Strukturabschnitt angeordnet sein.

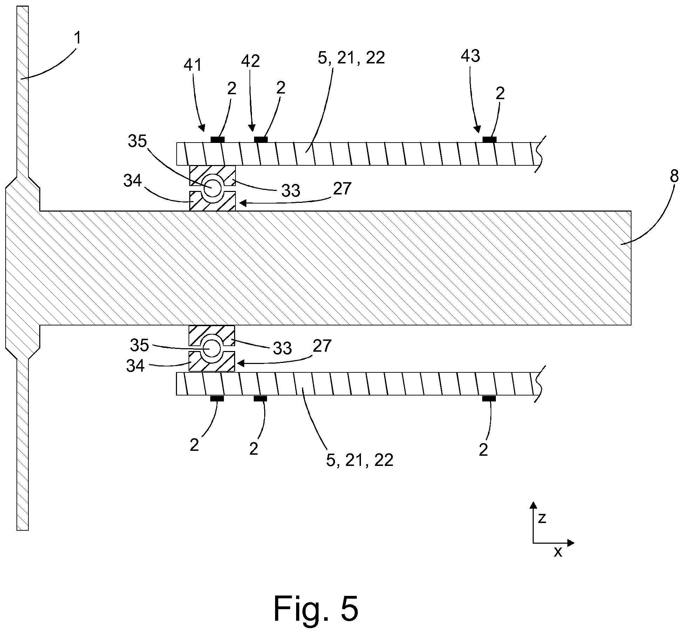

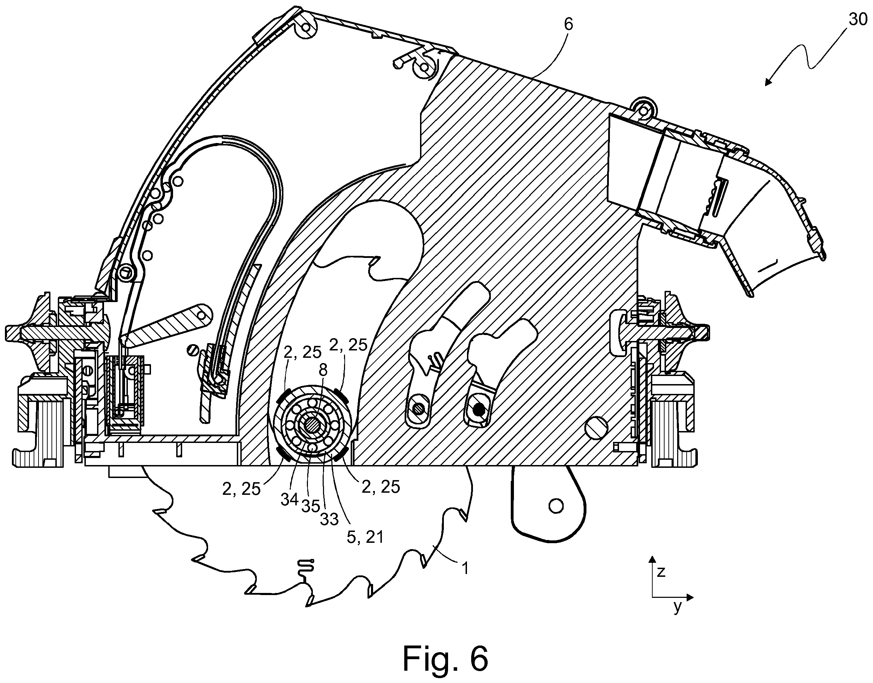

Gemäß einer dritten Ausführungsform ist die Dehnungsmessstreifen-Anordnung 2 an der Tragestruktur 21 angeordnet. Das Drehlager 27 ist zweckmäßigerweise nicht an einem Lagerflansch angeordnet sondern stattdessen an einem exemplarisch ringförmigen oder hohlzylindrischen Abschnitt der Tragestruktur 21, der auch als der erste Teilabschnitt 21 bezeichnet werden kann. Die dritte Ausführungsform ist in den Figuren 5 und 6 zu sehen; die Figur 6 zeigt ein gemäß der dritten Ausführungsform ausgebildetes Elektrowerkzeug 30.

Exemplarisch kann die dritte Ausführungsform wie die zweite Ausführungsform ausgeführt sein, mit dem Unterschied, dass der Lagerflansch 9 nicht vorhanden ist, das Drehlager direkt am ersten Teilabschnitt 22 anliegt und die Dehnungsmessstreifen-Anordnung 2 am ersten Teilabschnitt 22 angeordnet ist. Zweckmäßigerweise ist die Dehnungsmessstreifen-Anordnung 2 an einer dem Drehlager 27 abgewandten und/oder radial nach außen gerichteten Fläche der Tragstruktur 21, insbesondere des ersten Teilabschnitts 22, angeordnet. Alternativ oder zusätzlich dazu kann die Dehnungsmessstreifen-Anordnung 2 auch an einer radial nach innen gerichteten Fläche der Tragstruktur 21, insbesondere des ersten Teilabschnitts 22, angeordnet sein.

Das Drehlager 27 liegt exemplarisch unmittelbar an der Tragstruktur 21, insbesondere dem ersten Teilabschnitt 22 an. Die Tragstruktur 21 umgreift das Drehlager 27. Eine radial nach innen gerichtete Mantelfläche der Tragstruktur 21, insbesondere des ersten Teilabschnitts 22, liegt an einer radial nach außen gerichteten Fläche des Drehlagers 27, insbesondere des Außenrings 33, an.

Bei der Tragstruktur 21, insbesondere dem ersten Teilabschnitt 22, handelt es sich vorzugsweise um einen Abschnitt des Getriebegehäuses, das vorzugsweise auch die Antriebseinrichtung 7 trägt. Der Strukturabschnitt 5 wird hier folglich durch das Getriebegehäuse bereitgestellt.

Wie in der Figur 5 zu sehen, kann die Dehnungsmessstreifen-Anordnung 2 relativ zum Drehlager 27 in verschiedenen Axialbereichen 41, 42, 43 angeordnet sein. Bevorzugt ist die Dehnungsmessstreifen-Anordnung 2 nur in einem der Axialbereiche 41, 42, 43 angeordnet, kann aber auch in mehreren Axialbereichen 41, 42, 43 angeordnet sein.

Exemplarisch ist die Dehnungsmessstreifen-Anordnung 2 in Axialrichtung der Welle 8 in einem gleichen ersten Axialbereich 41 wie das Drehlager 27 angeordnet. Alternativ oder zusätzlich dazu kann die Dehnungsmessstreifen-Anordnung 2 auch in einem sich an den ersten Axialbereich 41 anschließenden zweiten Axialbereich 42 und/oder in einem von dem ersten Axialbereich 41 beabstandeten dritten Axialbereich 43 angeordnet sein.

Die Dehnungsmessstreifen-Anordnung 2 ist in der Figur 5 in den verschiedenen Axialbereichen 41, 42, 43 jeweils an einer radial nach außen gerichteten Fläche des ersten Teilabschnitts 22 angeordnet, kann aber auch an einer radial nach innen gerichteten Fläche angeordnet sein, insbesondere an derselben Fläche wie das Drehlager 27.

Diese Anordnungsmöglichkeiten gelten zweckmäßigerweise auch für die anderen Ausführungsformen.

Bei einer Variante der dritten Ausführungsform ist die Dehnungsmessstreifen-Anordnung 2 an einem den ersten Teilabschnitt 22 umgreifenden Strukturabschnitt angeordnet.

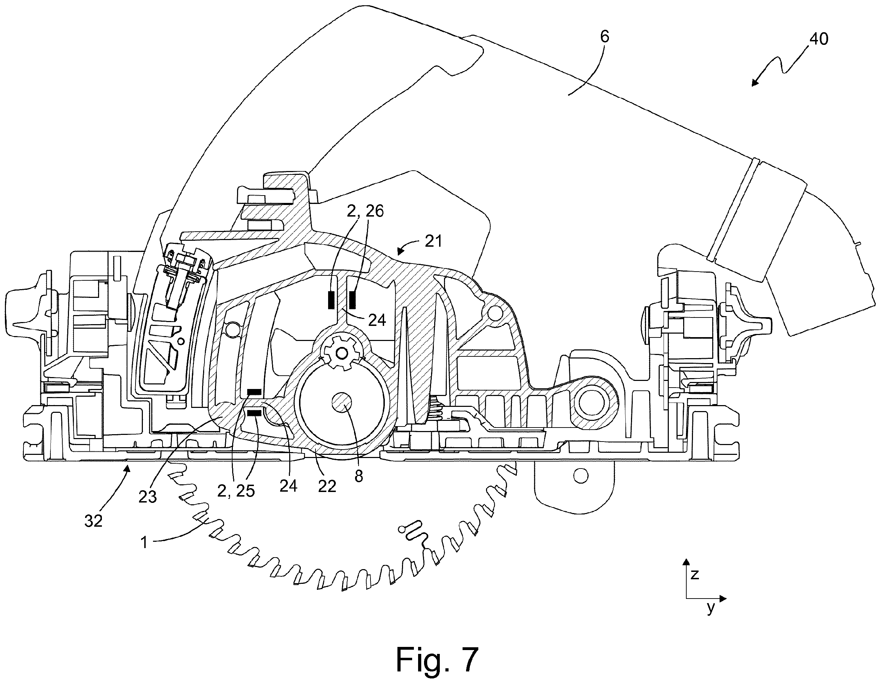

Die Figur 7 zeigt ein Elektrowerkzeug 40 gemäß einer vierten Ausführungsform. Bei der vierten Ausführungsform umfasst die Dehnungsmessstreifen-Anordnung 2 mehrere Dehnungsmessstreifen 25, 26 die an der Tragstruktur 21 angeordnet sind. Beispielsweise sind die Dehnungsmessstreifen an die Tragstruktur 21 geklebt oder laserstrukturiert.

Die Dehnungsmessstreifen 25, 26 dienen zur Erfassung einer Deformation der Tragstruktur 21, die durch eine von der Welle 8 auf die Tragstruktur 21 ausgeübte Kraft verursacht wird.

Zweckmäßigerweise sind die Dehnungsmessstreifen 25, 26 an zwei relativ zur Welle 8 radial nach außen verlaufenden Abschnitten 24 der Tragstruktur 21 angeordnet. Exemplarisch ist der Dehnungsmessstreifen 25 an einem horizontal verlaufenden Abschnitt 24 angeordnet, und der Dehnungsmessstreifen 26 ist an einem vertikal verlaufenden Abschnitt 24 angeordnet. Die Abschnitte 24 sind insbesondere stegförmig ausgebildet.

Die Abschnitte 24 verbinden zweckmäßigerweise einen ersten Teilabschnitt 22 und einem zweiten Teilabschnitt 23 der Tragstruktur 21 miteinander. Exemplarisch umgibt der erste Teilabschnitt 22 die Welle 8. Insbesondere stellt der erste Teilabschnitt 22 ein Getriebegehäuse dar oder umfasst ein Getriebegehäuse. Vorzugsweise ist die Welle 8 an dem ersten Teilabschnitt 22 gelagert. Der zweite Teilabschnitt 23 liegt in dem vom Werkzeug 1 ausgehenden Kraftfluss zweckmäßigerweise hinter dem - also stromabwärts vom - ersten Teilabschnitt 22.

Zweckmäßigerweise wird eine der vorstehend genannten, den Strukturabschnitt 5 aufweisenden Komponenten als Nachrüst-Anordnung bereitgestellt, mit dem ein Elektrowerkzeug, insbesondere ein vollständig funktionsfähiges Elektrowerkzeug, nachgerüstet werden kann. Das Werkzeug ist vorzugsweise eine Säge, eine Flachdübelfräse oder ein Winkelschleifer. Insbesondere kann der vorstehend erläuterte Lagerflansch 9, die Tragestruktur 21 und/oder der erste Teilabschnitt 22 als Nachrüst-Anordnung bereitgestellt werden.

Eine solche Nachrüst-Anordnung dient dem Nachrüsten eines Elektrowerkzeug, das eine Tragstruktur 21, ein an der Tragstruktur 21 angeordnetes Drehlager 27, eine über das Drehlager 27 an der Tragestruktur 21 gelagerte Welle 8 und ein mit der Welle 8 gekoppeltes rotierbares Werkzeug 1, insbesondere ein Sägeblatt, Fräser oder eine Schleifscheibe, umfasst, wobei die Nachrüst-Anordnung über einen Strukturabschnitt 5 verfügt, an dem eine Dehnungsmessstreifen-Anordnung 2 angeordnet ist, und die Nachrüst-Anordnung derart ausgebildet ist, dass der Strukturabschnitt 5 als stationärer, kraftübertragend mit dem Drehlager 27 gekoppelter Strukturabschnitt einbaubar ist, so dass die Dehnungsmessstreifen-Anordnung 2 nicht an dem Drehlager 27 angeordnet ist.

Die Nachrüst-Anordnung ist insbesondere derart ausgeführt, dass durch ihren Einbau eine Konfiguration gemäß Figur 2 oder 5 erzielt werden kann.

Das Elektrowerkzeug, insbesondere das vollständig funktionsfähige Elektrowerkzeugs, kann mit der Nachrüst-Anordnung durch den folgenden Schritt nachgerüstet werden: Einbauen der Nachrüst-Anordnung, so dass der Strukturabschnitt (5) im Elektrowerkzeug ein stationärer, kraftübertragend mit dem Drehlager (27) gekoppelter Strukturabschnitt ist und die Dehnungsmessstreifen-Anordnung (2) nicht an dem Drehlager (27) angeordnet ist.

Ferner kann beim Nachrüsten, insbesondere vor dem vorgenannten Schritt, folgender Schritt durchgeführt werden: Ausbauen eines mit dem Drehlager (27) kraftübertragend gekoppelten Strukturabschnitts, insbesondere eines Lagerflansches, einer Tragestruktur und/oder eines ersten Teilabschnitts der Tragestruktur.

Im Folgenden soll näher auf eine Erfassung und Auswertung der mechanischen Größe 3 als Vektorgröße eingegangen werden. Die nachstehenden Erläuterungen gelten für alle Ausführungsformen.

Erfindungsgemäß ist die Dehnungsmessstreifen-Anordnung 2 ausgebildet, die mechanische Größe als mechanische Vektorgröße zu erfassen und die Steuereinrichtung 4 ist ausgebildet, das Ereignis und/oder den Zustand des Elektrowerkzeugs 10, 20, 30, 40, 50 gemäß einer Richtung und/oder einer Richtungsänderung der mechanischen Vektorgröße 3 zu erkennen.

Dadurch, dass die Ereignis- und/oder Zustandserkennung des Elektrowerkzeugs 10 anhand einer Richtung und/oder Richtungsänderung einer erfassten mechanischen Vektorgröße 3 erfolgt, kann ein Ereignis oder eine Zustandsänderung des Elektrowerkzeugs 10 bereits zu einem sehr frühen Zeitpunkt festgestellt werden. Die Ereignis- und/oder Zustandserkennung wird somit verbessert.

Exemplarisch umfasst die Dehnungsmessstreifen-Anordnung 2 mehrere Dehnungsmessstreifen 25, mit denen jeweils eine Deformation des Strukturabschnitts 5 erfasst wird. Aus den erfassten Deformationen verschiedener Dehnungsmessstreifen 25 kann ein Deformationsvektor gebildet werden, der vorzugsweise als die mechanische Vektorgröße dient. Anhand der Richtung der mechanischen Vektorgröße kann zweckmäßigerweise auf die vom Werkzeug 1 ausgehende Kraft geschlossen werden, bzw. erkannt werden, in welche Richtung das Werkzeug 1 insbesondere relativ zum einer anderen Komponente des Werkzeugs 1, beispielsweise dem Gehäuse 6, drängt. Vorzugsweise entspricht die Richtung der erfassten mechanischen Vektorgröße der Richtung, in die das Werkzeug 1 drängt.

Anhand der Figur 8 soll nachstehend im Detail erläutert werden, wie die Erkennung eines bestimmten Ereignisses und/oder Zustands exemplarisch erfolgen kann.

Die Figur 8 zeigt ein Diagramm mit verschiedenen Richtungsbereichen 14, 15 und 16, zwei Richtungsschwellenwerten 17, 18 und der erfassten mechanischen Vektorgröße 3.

Das Diagramm ist in vier Quadranten aufgeteilt. Jeder Quadrant umfasst 90 Grad. Das Bezugszeichen 19 kennzeichnet die Null-Grad-Linie. Die nachstehend erwähnten Winkelkoordinaten bzw. Gradzahlen sind im mathematisch positiven Drehsinn (Gegenuhrzeigersinn) zu verstehen. Zweckmäßigerweise verläuft die Null-Grad-Linie parallel zur Auflagefläche 9 und/oder zur Vorschubrichtung 12.

Bei den Richtungsbereichen 14, 15 und 16 handelt es sich exemplarisch um zweidimensionale Richtungsbereiche. Die Richtungsbereiche 14, 15 und 16 können hier auch als Winkelbereiche bezeichnet werden.

Zweckmäßigerweise liegen die Richtungsbereiche 14, 15, 16 in einer Ebene. Die Ebene ist zweckmäßigerweise parallel zur Ebene des Werkzeugs 1 bzw. senkrecht zur Axialrichtung der Welle 8 ausgerichtet. Die Richtungsbereiche 14, 15, 16 überlappen einander vorzugsweise nicht.

Die Steuereinrichtung 4 ist ausgebildet, wenigstens einen Richtungsbereich 14, 15 oder 16 bereitzustellen. Beispielsweise ist der wenigstens eine Richtungsbereich in einem Speicher in der Steuereinrichtung 4 abgespeichert. Alternativ oder zusätzlich dazu kann die Steuereinrichtung 4 auch ausgebildet sein, den wenigstens einen Richtungsbereich selbst zu erzeugen. Die Steuereinrichtung 4 ist ferner ausgebildet, zu bestimmen, ob die erfasste mechanische Vektorgröße 3 innerhalb oder außerhalb des Richtungsbereichs 14, 15 oder 16 liegt, und basierend auf dieser Bestimmung den Zustand des Elektrowerkzeugs 10 zu erkennen.

Zweckmäßigerweise ist die Steuereinrichtung 4 ausgebildet, eine Mehrzahl von Richtungsbereichen 14, 15, 16 bereitzustellen und verschiedene Ereignisse und/oder Zustände basierend darauf zu erkennen, in welchem der Richtungsbereiche 14, 15, 16 die Richtung der mechanischen Vektorgröße 3 liegt. Insbesondere ist dabei jedem der Richtung Bereiche 14, 15, 16 ein jeweiliges Ereignis und/oder Zustand zugeordnet.

Der erste Richtungsbereich 14 stellt einen Richtungsbereich dar, in dem die mechanische Vektorgröße 3 liegt, wenn das Werkzeug 1 in das Werkstück 1 eingetaucht ist und das Elektrowerkzeug 10 relativ zum Werkstück 1 in Vorschubrichtung 12 bewegt wird. Exemplarisch befindet sich der erste Richtungsbereich 14 in den beiden unteren Quadranten, also innerhalb eines Bereichs zwischen 180 Grad und 360 Grad. In dem gezeigten Beispiel erstreckt sich der erste Richtungsbereich 14 von 220 Grad bis 330 Grad.

Eine mechanische Vektorgröße 3, die in dem ersten Richtungsbereich 14 liegt, ist ein Indikator dafür, dass das Ereignis bzw. der Zustand vorliegt, dass mit dem Elektrowerkzeug 10 in Vorschubrichtung 12 vorwärts gesägt wird. Dementsprechend ist die Steuereinrichtung 4 ausgebildet, zu erkennen, dass ein "Vorwärtssäge-Ereignis" bzw. "Vorwärtssäge-Zustand" vorliegt, wenn die mechanische Vektorgröße 3 in dem ersten Richtungsbereich 14 liegt.

Der zweite Richtungsbereich 15 stellt einen Richtungsbereich dar, in dem die mechanische Vektorgröße liegt, wenn das Werkzeug 1 in das Werkstück 11 eingetaucht ist und das Elektrowerkzeug 10 relativ zum Werkstück 11 entgegengesetzt zur normalen Vorschubrichtung 12 - also in Rückwärtsrichtung bewegt wird. Ferner stellt der zweite Richtungsbereich 15 einen Richtungsbereich dar, in dem die mechanische Vektorgröße 3 liegt, wenn das Werkzeug 1 in das Werkstück 11 eingetaucht wird. Exemplarisch befindet sich der zweite Richtungsbereich 15 in den beiden linken Quadranten, also innerhalb eines Bereichs zwischen 90 Grad und 270 Grad. In dem gezeigten Beispiel erstreckt sich der zweite Richtungsbereich 14 von 125 Grad bis 220 Grad.

Eine mechanische Vektorgröße 3, die in dem zweiten Richtungsbereich 15 liegt, ist ein Indikator dafür, dass das Ereignis bzw. der Zustand vorliegt, dass mit dem Elektrowerkzeug 10 rückwärts gesägt wird oder dass das Werkzeug 1 in das Werkstück 11 eingetaucht wird. Dementsprechend ist die Steuereinrichtung 4 ausgebildet, zu erkennen, dass ein "Rückwärtssäge-Ereignis" bzw. "Rückwärtssäge-Zustand" oder ein "Eintauch-Ereignis" vorliegt, wenn die mechanische Vektorgröße 3 in dem zweiten Richtungsbereich 15 liegt.

Der erste Richtungsbereich 14 und der zweite Richtungsbereich 15 stellen zusammen einen Normalbereich dar. Solange sich die mechanische Vektorgröße 3 in dem Normalbereich befindet, kann die Steuereinrichtung 4 annehmen, dass ein sicherer Betrieb des Elektrowerkzeugs 10 vorliegt und beispielsweise ein entsprechendes Signal bereitstellen.

Der dritte Richtungsbereich 16 stellt einen Richtungsbereich dar, in dem die mechanische Vektorgröße liegt, wenn ein Kickback-Ereignis vorliegt. Exemplarisch befindet sich der dritte Richtungsbereich 16 in den beiden oberen Quadranten, also innerhalb eines Bereichs zwischen 0 Grad und 180 Grad. In dem gezeigten Beispiel erstreckt sich der dritte Richtungsbereich 16 von 5 Grad bis 100 Grad. Zweckmäßigerweise ist die Steuereinrichtung 4 ausgebildet, das Kickback-Ereignis zu erkennen, wenn die mechanische Vektorgröße 3 in dem dritten Richtungsbereich 16 liegt.

Der Richtungsbereich, in dem die Steuereinrichtung 4 auf ein Kickback-Ereignis schließt, kann auch größer definiert werden. Beispielsweise können die Grenzen dieses Richtungsbereichs zwischen die Grenzen des Normalbereichs und die Grenzen des dritten Richtungsbereichs 16 gelegt werden. Dies ist in der Figur 2 durch die beiden Richtungsschwellenwerte 17, 18 darstellt. Exemplarisch schließen sich die Richtungsschwellenwerte 17, 18 an die Grenzen des Normalbereichs an. Alternativ dazu können die Richtungsschwellenwerte auch auf den Grenzen des Normalbereichs liegen.

Zweckmäßigerweise kann der sich im Uhrzeigersinn von dem zweiten Richtungsschwellenwert 18 zu dem ersten Richtungsschwellenwert 17 erstreckende Richtungsbereich an Stelle des dritten Richtungsbereichs 16 verwendet werden. Der (in der Figur 2 gezeigte) dritte Richtungsbereich 16 ist in diesem Fall optional.

Zweckmäßigerweise ist die Steuereinrichtung 4 ausgebildet, dann, wenn die mechanische Vektorgröße 3 zwischen den beiden Richtungsschwellenwerten 17, 18 - also im Gegenuhrzeigersinn hinter dem ersten Richtungsschwellenwert 17 und vor dem zweiten Richtungsschwellenwert 18 - liegt, das Kickback-Ereignis zu erkennen. Das Kickback-Ereignis kann somit bereits zu einem Zeitpunkt erkannt werden, in dem die Ursache für den Kickback bereits gegeben ist, das Elektrowerkzeug 10 oder das Werkstück 11 jedoch noch nicht signifikant beschleunigt wurden bzw. noch keinen Rückstoß oder Rückschlag ausgeübt haben. Zweckmäßigerweise kann die Steuereinrichtung 4 ausgebildet sein, das Kickback-Ereignis 50ms bis 100 ms vor einer (ohne Erkennung und Reaktion auf den Kickback) auftretenden Beschleunigung des Elektrowerkzeugs 10 gegenüber dem Werkstück 11 zu erkennen. Bei der Beschleunigung handelt es sich beispielsweise um eine Beschleunigung mit einer Komponente nach oben bzw. einer Komponente in 90-Grad-Richtung in dem gezeigten Diagramm.

Alternativ oder zusätzlich zu der vorstehend beschriebenen Ereignis- und/oder Zustandserkennung basierend auf der Richtung der erfassten mechanischen Vektorgröße 3 ist es auch möglich, die Ereignis- und/oder Zustandserkennung basierend auf einer Richtungsänderung der mechanischen Vektorgröße 3 durchzuführen.

Steht beispielsweise ein Kickback unmittelbar bevor, so dreht sich die mechanische Vektorgröße 3 in Richtung hin zu dem dritten Richtungsbereich 16. Die Steuereinrichtung 4 kann dementsprechend ausgebildet sein, basierend auf einer erfassten Drehung der mechanischen Vektorgröße 3 ein Ereignis und/oder Zustand zu erkennen. Beispielsweise ist die Steuereinrichtung 4 ausgebildet, die Winkelgeschwindigkeit der mechanischen Vektorgröße mit einem Geschwindigkeitsschwellenwert zu vergleichen und bei Überschreiten des Geschwindigkeitsschwellenwerts das Ereignis- und/oder den Zustand zu erkennen. Ferner kann die Steuereinrichtung 4 ausgebildet sein, zu bestimmen, um welchen Änderungswinkel sich die mechanische Vektorgröße 3 insbesondere innerhalb eines bestimmten Zeitfensters geändert hat und diesen Änderungswinkel mit einem Winkelschwellenwert zu vergleichen, um das Ereignis- und/oder den Zustand zu erkennen.

Bei der Kickback-Erkennung kann die Steuereinrichtung 4 ferner ausgebildet sein, verschiedene Arten von Kickbacks zu unterscheiden. Steht beispielsweise unmittelbar ein Kickback bevor, der bei einem Rückwärtssägen oder Eintauchen auftritt, so dreht sich die mechanische Vektorgröße 3 (ausgehend von dem zweiten Richtungsbereich 15) im Gegenuhrzeigersinn, während sich die mechanische Vektorgröße 3 bei einem Kickback, der durch ein Einklemmen des Werkzeugs 1 im Werkstück 11 verursacht wird, im Uhrzeigersinn dreht. Die Steuereinrichtung 4 kann dementsprechend ausgebildet sein, die Drehrichtung der mechanischen Vektorgröße 3 bei der Erkennung des Ereignisses und oder Zustands zu berücksichtigen.

Ferner kann die Steuereinrichtung 4 ausgebildet sein, bei der Zustands- und/oder Ereigniserkennung auch einen Betrag der erfassten mechanischen Vektorgröße 3 zu berücksichtigen. Beispielsweise kann die Steuereinrichtung 4 ausgebildet sein, den Zustand und/oder das Ereignis nur dann zu erkennen, wenn der Betrag der mechanischen Vektorgröße 3 größer als ein Schwellenwert ist. Auf diese Weise kann verhindert werden, dass im Betrieb auftretende schwache Stöße fälschlicherweise als Kickback erkannt werden.

Zudem kann die Steuereinrichtung 4 ausgebildet sein, die Zeitdauer zu berücksichtigen, mit der die mechanische Vektorgröße 3 innerhalb eines bestimmten Richtungsbereichs 14, 15, 16 liegt. Beispielsweise kann die Steuereinrichtung 4 ausgebildet sein, den Zustand- und/oder das Ereignis nur dann zu erkennen, wenn die mechanische Vektorgröße länger als ein bestimmter Zeitschwellenwert in einem bestimmten Richtungsbereich 14, 15, 16 liegt.

Ferner kann die Steuereinrichtung 4 ausgebildet sein, anhand der Richtung der erfassten mechanischen Vektorgröße 3 zu bestimmen, ob ein Verschleißzustand vorliegt. Bei dem Verschleißzustand kann es sich insbesondere um einen Verschleißzustand des Werkzeugs 1 handeln. Die Steuereinrichtung 4 kann ausgebildet sein, einen Richtungsbereich bereitzustellen und, basierend darauf, ob sich die mechanische Vektorgröße 3 innerhalb oder außerhalb des Richtungsbereichs befindet, einen Verschleißzustand festzustellen. Exemplarisch kann die Steuereinrichtung 4 eine Richtungsumkehr, beispielsweise eine Kraftrichtungsumkehr, der mechanischen Vektorgröße 3 erkennen und daraus auf den Verschleißzustand schließen. Die Steuereinrichtung 4 kann dann über ein entsprechendes Signalmittel ein akustisches oder visuelles Signal ausgeben, dass anzeigt, dass der Verschleißzustand vorliegt.

Die vorstehend erläuterten konkreten Winkelangaben der Richtungsbereiche 14, 15, 16 sind rein exemplarisch zu verstehen. Je nach Typ und Aufbau des Elektrowerkzeugs 10 können die tatsächlichen Winkel variieren. Die tatsächlichen Winkel der Richtungsbereiche 14, 15, 16 können mittels Kalibrierung ermittelt werden. Die Kalibrierung kann beispielsweise bei der Entwicklung oder Herstellung des Elektrowerkzeugs und/oder durch den Benutzer erfolgen.

Zweckmäßigerweise ist die Steuereinrichtung 4 ausgebildet, eine Kalibrierung eines oder mehrerer Richtungsbereiche 14, 15, 16 vorzunehmen. Beispielsweise kann mittels der Benutzerschnittstelle 5 die Kalibrierung initiiert werden. Die Steuereinrichtung 4 kann daraufhin über die Antriebseinrichtung 7 das Werkzeug 1 antreiben und dabei über die Dehnungsmessstreifen-Anordnung 2 die mechanische Vektorgröße 3 erfassen. Basierend auf der erfassten mechanischen Vektorgröße 3 kann die Steuereinrichtung 4 dann einen Richtungsbereich und/oder einen oder mehrere Schwellenwerte erstellen und in einem Speicher der Steuereinrichtung 2 hinterlegen. Dieser Vorgang kann beispielsweise vorgenommen werden, wenn ein neues Werkzeug 1 montiert wird. Die Verschleißerkennung des Werkzeugs 1 kann so verbessert werden.

Im Folgenden wird auf die Dehnungsmessstreifen-Anordnung 2 und die Erfassung der mechanischen Vektorgröße 3 im Detail eingegangen.

Die Dehnungsmessstreifen-Anordnung 2 ist zweckmäßigerweise ausgebildet, die mechanische Vektorgröße 3 als wenigstens zweidimensionalen Vektor zu erfassen. Zu diesem Zweck ist die Dehnungsmessstreifen-Anordnung 2 ausgebildet, die der mechanischen Vektorgröße 3 zugrunde liegende mechanische Größe in wenigstens zwei verschiedenen Raumrichtungen zu messen. Bei den beiden Raumrichtungen handelt es sich beispielsweise um eine Raumrichtung, die parallel zur Vorschubrichtung 12 verläuft und eine Raumrichtung, die senkrecht zur Vorschubrichtung 12 verläuft. Zweckmäßigerweise sind beide Raumrichtungen senkrecht zur Axialrichtung der Welle 8. Beispielsweise verfügt die Dehnungsmessstreifen-Anordnung 2 über wenigstens zwei Dehnungsmessstreifen 25. Zweckmäßigerweise dient jeder der Dehnungsmessstreifen 25 dazu, die zugrunde liegende mechanische Größe - also eine Kraft, eine Beschleunigung, eine Geschwindigkeit, eine Auslenkung, eine Deformation und/oder eine mechanische Spannung, in einer anderen Raumrichtung zu messen.

Die mechanische Vektorgröße 3 ist insbesondere ein Kraftvektor, ein Beschleunigungsvektor, ein Geschwindigkeitsvektor, ein Auslenkungsvektor, ein Deformationsvektor und/oder ein mechanischer Spannungsvektor oder Spannungstensor. Dementsprechend kann die Dehnungsmessstreifen-Anordnung 2 ausgebildet sein, in wenigstens zwei Raumrichtungen eine Kraft, eine Beschleunigung, eine Geschwindigkeit, eine Auslenkung, eine Deformation und/oder eine mechanische Spannung zu messen.

Grundsätzlich kann die Dehnungsmessstreifen-Anordnung 2 eingerichtet sein, die mechanische Vektorgröße 3 an einem Teil innerhalb des vom Werkzeug 1 ausgehenden Kraftflusses zu messen. Der Kraftfluss verläuft exemplarisch von dem Werkzeug 1 über die Welle 8, eine Lagereinrichtung 27, die Tragstruktur 21, das Gehäuse 6 und die Auflagefläche 9 zu dem Werkstück 11. Insbesondere ist die Dehnungsmessstreifen-Anordnung 2 ausgebildet, die mechanische Vektorgröße 3 zwischen zwei im Kraftfluss hintereinander liegenden Teilen zu messen.

Alternativ dazu kann die mechanische Vektorgröße auch außerhalb des vom Werkzeug 1 ausgehenden Kraftflusses gemessen werden.

Im Folgenden werden verschiedene Möglichkeiten diskutiert, wie auf ein erkanntes Ereignis und/oder einen erkannten Zustand reagiert werden kann. Zweckmäßigerweise kann jede dieser Möglichkeit bei jedem der vorstehend diskutierten Elektrowerkzeuge vorgesehen sein.

Vorzugsweise ist die Steuereinrichtung 4 ausgebildet, in Ansprechen auf das erkannte Ereignis und/oder Zustand ein entsprechendes Signal bereitzustellen. Die Steuereinrichtung 4 kann beispielsweise ausgebildet sein, das Signal in einem Speicher abzulegen und/oder über ein insbesondere akustisches oder visuelles Signalausgabemittel des Elektrowerkzeugs auszugeben. Bei dem abgelegten Signal kann es sich insbesondere um eine Datenaufzeichnung handeln, bei der durch die Dehnungsmessstreifen-Anordnung 2 erfasste Daten aufgezeichnet werden. Beispielsweise handelt es sich um eine Datenaufzeichnung zum Zwecke einer Unfallhergangserfassung.

Ferner kann die Steuereinrichtung 4 ausgebildet sein, in Ansprechen auf das erkannte Ereignis und/oder Zustand eine bestimmte Ansteuerung der Antriebseinrichtung 7 vorzunehmen, beispielsweise um zu bewirken, dass das Werkzeug 1 nicht mehr angetrieben wird und/oder abgebremst, insbesondere komplett abgebremst wird. Dies ist insbesondere sinnvoll, wenn das erkannte Ereignis ein Kickback-Ereignis ist. Das Abbremsen kann dabei insbesondere mit demselben Elektromotor erfolgen, mit dem das Werkzeug 1 sonst angetrieben wird.

Alternativ oder zusätzlich kann das Elektrowerkzeug ein Bremsmittel umfassen und die Steuereinrichtung ausgebildet sein, in Ansprechen auf das erkannte Ereignis und/oder Signal das Bremsmittel so anzusteuern, dass das Werkzeug 1 abgebremst wird.

Zweckmäßigerweise ist die Steuereinrichtung 4 ausgebildet, bei einem erkannten Kickback-Ereignis über die Antriebseinrichtung 7 und/oder das Bremsmittel ein Abbremsen des Werkzeugs 1 zu einem Zeitpunkt zu bewirken, in dem noch kein Rückstoß oder Rückschlag des Elektrowerkzeugs und/oder des Werkstücks 11 erfolgt ist. Beispielsweise kann das Abbremsen zu einem Zeitpunkt erfolgen, in dem, zurückkehrend zur Figur 2, der Richtungsschwellenwert 17 oder 18 bereits überschritten wurde, die mechanische Vektorgröße 3 vorzugsweise jedoch noch nicht in dem dritten Richtungsbereich 16 liegt. Auf diese Weise kann der durch den Kickback bewirkte Rückstoß oder Rückschlag vermindert oder ganz verhindert werden.

Ferner kann das Elektrowerkzeug 10, 60 eine Positioniereinrichtung 29 umfassen, die ausgebildet ist, das Werkzeug 1 wahlweise in eine Betriebsstellung oder eine Sicherheitsstellung zu positionieren. Die Steuereinrichtung 4 kann ausgebildet sein, in Ansprechen auf das erkannte Ereignis und/oder den erkannten Zustand die Positioniereinrichtung 29 anzusteuern, so dass das Werkzeug 1 in die Betriebsstellung oder die Sicherheitsstellung positioniert wird. Die Positioniereinrichtung 29 ist beispielsweise ausgebildet, das Werkzeug 1 zwischen der Betriebsstellung und der Sicherheitsstellung zu verfahren und/oder verschwenken. Zweckmäßigerweise ist das Werkzeug 1 in der Sicherheitsstellung weiter in das Gehäuse 6 positioniert als in der Betriebsstellung. Zweckmäßigerweise wird das Werkzeug 1 in Ansprechen auf ein Kickback-Ereignis in die Sicherheitsstellung positioniert.

Die Figur 9 zeigt ein Flussdiagramm eines Verfahrens zum Erkennen eines Ereignisses und/oder Zustands eines Elektrowerkzeugs 10, 20, 30, 40, 50 mit einer Tragstruktur 21, einem an der Tragstruktur angeordneten Drehlager 27, einer über das Drehlager 27 an der Tragstruktur 27 gelagerten Welle 8, ein mit der Welle 8 gekoppeltes rotierbares Werkzeug 1, insbesondere ein Sägeblatt, Fräser oder eine Schleifscheibe, und einer Dehnungsmessstreifen-Anordnung 2 zur Erfassung einer mechanischen Größe 3, die von einer vom Werkzeug 1 ausgehenden Kraft abhängt, wobei die Dehnungsmessstreifen-Anordnung 2 an einem stationären, kraftübertragend mit dem Drehlager 27 gekoppelten Strukturabschnitt 5 und nicht an dem Drehlager 27 angeordnet ist, umfassend die Schritte: Erfassen S1 der mechanischen Größe 3 und Erkennen S2 des Ereignisses und/oder Zustands des Elektrowerkzeugs 10, 20, 30, 40, 50 gemäß der mechanischen Größe 3.

Zweckmäßigerweise wird das Verfahren mittels eines der vorstehend erläuterten Elektrowerkzeuge 10, 20, 30, 40, 50 ausgeführt.

Vorzugsweise verfügt das Verfahren über einen weiteren Schritt, in dem eine der vorstehend diskutierten Reaktionen auf das erkannte Ereignis und/oder den erkannten Zustand ausgeführt wird.

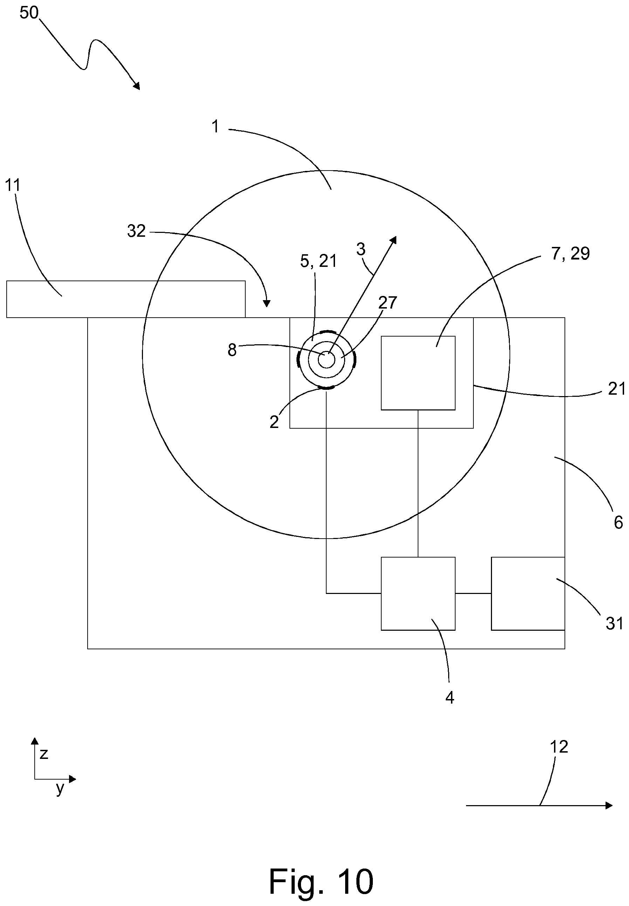

Die Figur 10 zeigt ein Elektrowerkzeug 50 gemäß einer fünften Ausführungsform. Das Elektrowerkzeug 50 ist hier exemplarisch als stationäre Säge, insbesondere als Tischkreissäge ausgebildet. Das Elektrowerkzeug 50 umfasst die vorstehend bereits im Zusammenhang mit dem Elektrowerkzeug 10 diskutierten Merkmale. Ferner kann bei dem Elektrowerkzeug 50 die Dehnungsmessstreifen-Anordnung 2 und/oder Tragstruktur 21 in Entsprechung zu der zweiten bis vierten Ausführungsform ausgestaltet sein.

Exemplarisch dreht sich das Werkzeug 1 hier in Gegenuhrzeigersinn. Zweckmäßigerweise wird das Werkstück 11 bei der Bearbeitung so in das als Sägeblatt ausgebildete Werkzeug 1 hineingeschoben, dass die Sägezähne von oben nach unten in das Werkstück 11 sägen. In der Figur 10 ist eine entsprechende Vorschubrichtung 12 eingezeichnet. Die Richtungsbereiche 14, 15, 16 und/oder Richtungsschwellenwerte 17, 18 sind bei dem Elektrowerkzeug 60 entsprechend angepasst. Beispielsweise können die in der Figur 8 gezeigten Richtungsbereiche 14, 15, 16 und/oder Richtungsschwellenwerte 17, 18 um den Mittelpunkt des Diagramms punktgespiegelt sein.

## Patentansprüche

1. Elektrowerkzeug (10, 20, 30, 40, 50), umfassend:
- eine Tragstruktur (21)
- ein an der Tragstruktur (21) angeordnetes Drehlager (27),
- eine über das Drehlager (27) an der Tragstruktur (21) gelagerte Welle (8),
- ein mit der Welle (8) gekoppeltes rotierbares Werkzeug (1), insbesondere ein Sägeblatt, Fräser oder eine Schleifscheibe,
- eine Dehnungsmessstreifen-Anordnung (2) zur Erfassung einer mechanischen Vektorgröße (3), die von einer vom Werkzeug (1) ausgehenden Kraft abhängt, und
- eine Steuereinrichtung (4), die ausgebildet ist, ein Ereignis und/oder einen Zustand des Elektrowerkzeugs (10, 20, 30, 40, 50) gemäß einer Richtung und/oder Richtungsänderung der erfassten mechanischen Vektorgröße (3) zu erkennen, wobei
die Dehnungsmessstreifen-Anordnung (2) an einem stationären, kraftübertragend mit dem Drehlager (27) gekoppelten Strukturabschnitt (5) und nicht an dem Drehlager (27) angeordnet ist, wobei der Strukturabschnitt (5) Teil der Tragstruktur (21) und/oder unmittelbar an der Tragstruktur (21) angeordnet ist, wobei
die Dehnungsmessstreifen-Anordnung (2) mehrere Dehnungsmessstreifen (25) umfasst, die auf einer die Welle (8) umlaufenden Bahn verteilt angeordnet sind, und
die Dehnungsmessstreifen-Anordnung (2) ausgebildet ist, die mechanische Vektorgröße (3) als wenigstens zweidimensionalen Vektor zu erfassen und zu diesem Zweck die der mechanischen Vektorgröße (3) zugrunde liegende mechanische Größe in wenigstens zwei verschiedene Raumrichtungen zu messen.

2. Elektrowerkzeug (10, 20, 30, 40, 50) nach Anspruch 1, **dadurch gekennzeichnet, dass** das Drehlager (27) unmittelbar an der Tragstruktur (21) angeordnet ist.

3. Elektrowerkzeug (10, 20, 30, 40, 50) nach Anspruch 1 oder 2, **dadurch gekennzeichnet, dass** die Tragstruktur (21) das Drehlager (27) umgreift und/oder der Strukturabschnitt (5) die Tragstruktur (21) umgreift.

4. Elektrowerkzeug (10, 20, 30, 40, 50) nach einem der Ansprüche 1 bis 3, **dadurch gekennzeichnet, dass** die Dehnungsmessstreifen-Anordnung (2) an einer dem Drehlager (27) abgewandten und/oder radial nach außen gerichteten Fläche des Strukturabschnitts (5) und/oder an einer radial nach innen gerichteten Fläche des Strukturabschnitts (5) angeordnet ist.

5. Elektrowerkzeug (20) nach einem der Ansprüche 1 bis 4, **dadurch gekennzeichnet, dass** die Tragstruktur (21) einen Lagerflansch (9) umfasst und der Strukturabschnitt (5) Teil des Lagerflansches (9) ist.

6. Elektrowerkzeug (10, 20, 30, 40, 50) nach einem der Ansprüche 1 bis 5, **dadurch gekennzeichnet, dass** die Tragstruktur (21) Teil eines Getriebegehäuses des Elektrowerkzeugs (10, 20, 30, 40, 50) ist.

7. Elektrowerkzeug (10, 20, 30, 40, 50) nach einem der Ansprüche 1 bis 5, **dadurch gekennzeichnet, dass** die Dehnungsmessstreifen-Anordnung (2) in Axialrichtung der Welle (8) in einem gleichen ersten Axialbereich (41) wie das Drehlager (27), in einem sich an den ersten Axialbereich (41) anschließenden zweiten Axialbereich (42) und/oder in einem von dem ersten Axialbereich (41) beabstandeten dritten Axialbereich (43) angeordnet ist.

8. Elektrowerkzeug (10, 20, 30, 40, 50) nach einem der Ansprüche 1 bis 7, **dadurch gekennzeichnet, dass** die Steuereinrichtung (4) ausgebildet ist, als das zu erkennende Ereignis und/oder den Zustand einen Kickback, ein Vorwärtssägen, ein Rückwärtssägen, ein Eintauchen des Werkzeugs (1) in ein Werkstück (11) und/oder einen Verschleißzustand des Elektrowerkzeugs (10, 20, 30, 40, 50), insbesondere des Werkzeugs (1), zu erkennen.

9. Elektrowerkzeug (10, 20, 30, 40, 50) nach einem der Ansprüche 1 bis 8, **dadurch gekennzeichnet, dass** die Steuereinrichtung (4) ausgebildet ist, in Ansprechen auf das erkannte Ereignis und/oder den erkannten Zustand ein Signal bereitzustellen, zu bewirken, dass das Werkzeug (1) abgebremst wird und/oder zu bewirken, dass das Werkzeug (1) von einer Betriebsstellung in eine Sicherheitsstellung versetzt wird.

10. Verfahren zum Erkennen eines Ereignisses und/oder Zustands eines Elektrowerkzeugs (10, 20, 30, 40, 50) mit einer Tragstruktur (21), einem an der Tragstruktur angeordneten Drehlager (27), einer über das Drehlager (27) an der Tragstruktur (27) gelagerten Welle (8), einem mit der Welle (8) gekoppelten rotierbaren Werkzeug (1), insbesondere einem Sägeblatt, Fräser oder eine Schleifscheibe, und einer Dehnungsmessstreifen-Anordnung (2) zur Erfassung einer mechanischen Vektorgröße (3), die von einer vom Werkzeug (1) ausgehenden Kraft abhängt, wobei die Dehnungsmessstreifen-Anordnung (2) an einem stationären, kraftübertragend mit dem Drehlager (27) gekoppelten Strukturabschnitt (5) und nicht an dem Drehlager (27) angeordnet ist, wobei der Strukturabschnitt (5) Teil der Tragstruktur (21) und/oder unmittelbar an der Tragstruktur (21) angeordnet ist, wobei die Dehnungsmessstreifen-Anordnung (2) mehrere Dehnungsmessstreifen (25) umfasst, die auf einer die Welle (8) umlaufenden Bahn verteilt angeordnet sind, umfassend die Schritte: Erfassen (S1) der mechanischen Vektorgröße (3) als wenigstens zweidimensionalen Vektor, und, zu diesem Zweck, Messen der der mechanischen Vektorgröße (3) zugrunde liegende mechanische Größe in wenigstens zwei verschiedenen Raumrichtungen, und Erkennen (S2) des Ereignisses und/oder Zustands des Elektrowerkzeugs (10, 20, 30, 40, 50) gemäß einer Richtung und/oder Richtungsänderung der mechanischen Vektorgröße (3).

## Claims

1. Power tool (10, 20, 30, 40, 50) comprising:
- a support structure (21)
- a pivot bearing (27) arranged on the support structure (21),
- a shaft (8) mounted on the support structure (21) via the pivot bearing (27),
- a rotatable tool (1), in particular a saw blade, milling cutter or grinding wheel, coupled to the shaft (8)
- a strain gauge arrangement (2) for detecting a mechanical vector quantity (3) which depends on a force emanating from the tool (1), and
- a control device (4) adapted to recognize an event and/or a state of the power tool (10, 20, 30, 40, 50) according to a direction or change of direction of the detected mechanical vector quantity (3), wherein
the strain gauge arrangement (2) is arranged on a stationary structure section (5) coupled in a force-transmitting manner to the pivot bearing (27) and is not arranged on the pivot bearing (27), wherein the structure section (5) is part of the support structure (21) and/or is arranged directly on the support structure (21), wherein the strain gauge arrangement (2) comprises a plurality of strain gauges (25) which are distributed on a path running around the shaft (8), and
the strain gauge arrangement (2) is adapted to detect (S1) the mechanical quantity (3) as at least two-dimensional vector, and, for this purpose, measure the mechanical quantity underlying the mechanical vector quantity (3) in at least two different directions in space.

2. Power tool (10, 20, 30, 40, 50) according to claim 1, **characterized in that** the pivot bearing (27) is arranged directly on the support structure (21).

3. Power tool (10, 20, 30, 40, 50) according to claim 1 or 2, **characterized in that** the support structure (21) reaches around the pivot bearing (27) and/or the structure section (5) reaches around the support structure (21).

4. Power tool (10, 20, 30, 40, 50) according to one of claims 1 to 3, **characterised in that** the strain gauge arrangement (2) is arranged on a surface of the structure section (5) facing away from the pivot bearing (27) and/or directed radially outwards, and/or is arranged on a radially inwardly directed surface of the structure section (5).

5. Power tool (20) according to one of claims 1 to 4, **characterized in that** the support structure (21) comprises a bearing flange (9) and the structural section (5) is part of the bearing flange (9).

6. Power tool (10, 20, 30, 40, 50) according to one of claims 1 to 5, **characterized in that** the support structure (21) is part of a gearbox housing of the power tool (10, 20, 30, 40, 50) .

7. Power tool (10, 20, 30, 40, 50) according to one of claims 1 to 5, **characterized in that** the strain gauge arrangement (2) is arranged, in the axial direction of the shaft (8), in a same first axial region (41) as the pivot bearing (27), in a second axial region (42) adjoining the first axial region (41) and/or in a third axial region (43) spaced apart from the first axial region (41).

8. Power tool (10, 20, 30, 40, 50) according to one of claims 1 to 7, **characterized in that** the control device (4) is adapted to recognize, as the event and/or the state to be recognized, a kickback, a forward sawing, a backward sawing, a plunging of the tool (1) into a workpiece (11) and/or a state of wear of the power tool (10, 20, 30, 40, 50), in particular of the tool (1).

9. Power tool (10, 20, 30, 40, 50) according to one of claims 1 to 8, **characterized in that** the control device (4) is adapted to provide a signal in response to the recognized event and/or the recognized state, in order to cause the tool (1) to be braked and/or to cause the tool (1) to be moved from an operating position into a safety position.

10. Method for recognizing an event and/or state of a power tool (10, 20, 30, 40, 50) having a support structure (21), a pivot bearing (27) arranged on the support structure, a shaft (8) mounted on the support structure (27) via the pivot bearing (27), a rotatable tool (1), in particular a saw blade, milling cutter or grinding wheel, coupled to the shaft (8), and a strain gauge arrangement (2) for detecting a mechanical vector quantity (3) dependent on a force emanating from the tool (1), wherein the strain gauge arrangement (2) is arranged on a stationary structure section (5) coupled in a force-transmitting manner to the pivot bearing (27) and is not arranged on the pivot bearing (27), wherein the structure section (5) is part of the support structure (21) and/or is arranged directly on the support structure (21), wherein the strain gauge arrangement (2) comprises a plurality of strain gauges (25) which are distributed on a path running around the shaft (8), comprising the steps: detecting (S1) the mechanical quantity (3) as at least two-dimensional vector, and, for this purpose, measuring the mechanical quantity underlying the mechanical vector quantity (3) in at least two different directions in space, and recognizing (S2) the event and/or state of the power tool (10, 20, 30, 40, 50) according to a direction and/or change in direction of the mechanical quantity (3).

## Revendications

1. Outil électrique (10, 20, 30, 40, 50), comprenant :
- une structure de support (21),
- un palier rotatif (27) disposé sur la structure de support (21),
- un arbre (8) monté sur la structure de support (21) par l'intermédiaire du palier rotatif (27),
- un outil rotatif (1) couplé à l'arbre (8), en particulier une lame de scie, une fraise ou un disque de ponçage,
- un ensemble de jauges extensométriques (2) destiné à détecter une grandeur de vecteur (3) mécanique, qui dépend d'une force provenant de l'outil (1), et
- un dispositif de commande (4) qui est réalisé pour détecter un événement et/ou un état de l'outil électrique (10, 20, 30, 40, 50) selon une direction et/ou un changement de direction de la grandeur de vecteur (3) mécanique détectée, dans lequel
l'ensemble de jauges extensométriques (2) est disposé sur une section de structure (5) stationnaire couplée avec transfert de force au palier rotatif (27) et non sur le palier rotatif (27), dans lequel la section de structure (5) fait partie de la structure de support (21) et/ou est disposée directement sur la structure de support (21), dans lequel
l'ensemble de jauges extensométriques (2) comprend plusieurs jauges extensométriques (25), qui sont disposées de manière répartie sur une trajectoire s'étendant autour de l'arbre (8), et
l'ensemble de jauges extensométriques (2) est réalisé pour détecter la grandeur de vecteur (3) mécanique en tant qu'au moins un vecteur bidimensionnel et pour mesurer à cette fin la grandeur mécanique sous-jacente à la grandeur de vecteur (3) mécanique dans au moins deux directions spatiales différentes.

2. Outil électrique (10, 20, 30, 40, 50) selon la revendication 1,
**caractérisé en ce que** le palier rotatif (27) est disposé directement sur la structure de support (21).

3. Outil électrique (10, 20, 30, 40, 50) selon la revendication 1 ou 2, **caractérisé en ce que** la structure de support (21) entoure le palier rotatif (27) et/ou la section de structure (5) entoure la structure de support (21).

4. Outil électrique (10, 20, 30, 40, 50) selon l'une quelconque des revendications 1 à 3, **caractérisé en ce que** l'ensemble de jauges extensométriques (2) est disposé sur une surface de la section de structure (5) opposée au palier rotatif (27) et/ou dirigée vers l'extérieur radialement et/ou est disposé sur une surface de la section de structure (5) dirigée vers l'intérieur radialement.

5. Outil électrique (20) selon l'une quelconque des revendications 1 à 4, **caractérisé en ce que** la structure de support (21) comprend une bride de palier (9) et la section de structure (5) fait partie de la bride de palier (9).

6. Outil électrique (10, 20, 30, 40, 50) selon l'une quelconque des revendications 1 à 5, **caractérisé en ce que** la structure de support (21) fait partie du boîtier de transmission de l'outil électrique (10, 20, 30, 40, 50).

7. Outil électrique (10, 20, 30, 40, 50) selon l'une quelconque des revendications 1 à 5, **caractérisé en ce que** l'ensemble de jauges extensométriques (2) est disposé dans la direction axiale de l'arbre (8) dans une première zone axiale (41) identique au palier rotatif (27), dans une deuxième zone axiale (42) située dans le prolongement de la première zone axiale (41) et/ou dans une troisième zone axiale (43) tenue à distance de la première zone axiale (41).

8. Outil électrique (10, 20, 30, 40, 50) selon l'une quelconque des revendications 1 à 7, **caractérisé en ce que** le dispositif de commande (4) est réalisé pour identifier en tant que l'événement à identifier et/ou l'état un recul, un sciage vers l'avant, un sciage vers l'arrière, un enfoncement de l'outil (1) dans une pièce (11) et/ou un état d'usure de l'outil électrique (10, 20, 30, 40, 50), en particulier de l'outil (1).

9. Outil électrique (10, 20, 30, 40, 50) selon l'une quelconque des revendications 1 à 8, **caractérisé en ce que** le dispositif de commande (4) est réalisé pour fournir un signal en réponse à l'événement identifié et/ou à l'état identifié pour entraîner le ralentissement de l'outil (1) et/ou pour entraîner le déplacement de l'outil (1) depuis une position de fonctionnement dans une position de sécurité.

10. Procédé pour identifier un événement et/ou un état d'un outil électrique (10, 20, 30, 40, 50) avec une structure de support (21), un palier rotatif (27) disposé sur la structure de support, un arbre (8) monté sur la structure de support (27) par l'intermédiaire de l'outil rotatif (27), un outil rotatif (1) couplé à l'arbre (8), en particulier une lame de scie, une fraise ou un disque de ponçage, et un ensemble de jauges extensométriques (2) destiné à détecter une grandeur de vecteur (3) mécanique, qui dépend d'une force provenant de l'outil (1), dans lequel l'ensemble de jauges extensométriques (2) est disposé sur une section de structure (5) stationnaire couplée avec transfert de force au palier rotatif (27) et non sur le palier rotatif (27), dans lequel la section de structure (5) fait partie de la structure de support (21) et/ou est disposée directement sur la structure de support (21), dans lequel l'ensemble de jauges extensométriques (2) comprend plusieurs jauges extensométriques (25), qui sont disposées de manière répartie sur une trajectoire s'étendant autour de l'arbre (8), comprenant les étapes : de détection (S1) de la grandeur de vecteur (3) mécanique en tant qu'au moins un vecteur bidimensionnel, et, à cette fin, de mesure de la grandeur mécanique sous-jacente à la grandeur de vecteur (3) mécanique dans au moins deux directions spatiales différentes, et d'identification (S2) de l'événement et/ou de l'état de l'outil électrique (10, 20, 30, 40, 50) selon une direction et/ou un changement de direction de la grandeur de vecteur (3) mécanique.
